# EUROPÄISCHE PATENTSCHRIFT

(11) **EP 0 916 590 B1**
(45) Veröffentlichungstag und Bekanntmachung des Hinweises auf die Patenterteilung: **22.07.2009**
(21) Anmeldenummer: 98120968.7
(22) Anmeldetag: 05.11.1998
(51) Int. Cl.: B65D 71/68

(54) **Behälterträger**
Container carrier
Porte-récipients

(30) Priorität: 17.11.1997 DE 29720346 U; 18.06.1998 DE 29810883 U
(43) Veröffentlichungstag der Anmeldung: 19.05.1999
(73) Patentinhaber: A&R Carton GmbH, 65830 Kriftel (DE)
(72) Erfinder: Eckermann, Jens, 28309 Bremen (DE); Scheelcke, Hilger, 28357 Bremen (DE); Skolik, Bernhard, 27211 Bassum (DE)
(74) Vertreter: Hauck Patent- und Rechtsanwälte

(56) Entgegenhaltungen:
- DE-U- 8 712 659
- FR-A- 763 350
- FR-A- 2 641 521
- FR-A- 2 677 608
- NL-A- 8 701 965
- US-A- 1 569 932
- US-A- 2 665 049
- US-A- 2 887 245
- US-A- 4 469 222
- US-A- 4 566 626
- US-A- 5 680 930

## Beschreibung

Die Erfindung bezieht sich auf einen Behälterträger insbesondere für die Aufnahme von Flaschen, der einen kastenförmigen Tragbehälter und eine darin angeordnete Mittelwand mit herausfaltbaren Querklappen zum Bilden von Gefachen aufweist.

Derartige Behälterträger sind bekannt. Dabei kann der Behälterträger oben geschlossen oder körbchenartig mit einem oben offenen Tragbehälter und einem über diesen hinausstehenden Traggriff der Mittelwand ausgeführt sein ("open basket carrier"). Ferner ist bekannt, derartige Behälterträger aus zwei flachen Zuschnitten Kraftkarton herzustellen, von denen der eine den Tragbehälter und der andere die Mittelwand bildet. Wenn derartige Behälterträger aus einem einteiligen Zuschnitt faltbaren Flachmaterials hergestellt werden, wird verhältnismäßig viel Material benötigt. Deshalb sind auch schon den Materialaufwand vermindernde Behälterträger bekannt geworden, die beispielsweise in der DE-OS 28 36 826 und in der DE-OS 30 33 773 beschrieben sind. Gemäß letztgenannter Schrift können solche Behälterträger hergestellt und Flaschen darin abgepackt werden, indem die Mittelwand von oben zwischen eine Flaschengruppe gesetzt und der Tragbehälterzuschnitt um die Anordnung von Behältergruppe und Mittelwand gefaltet und mit dieser verbunden wird. Gemäß DE-PS 196 02 358 können statt dessen auch Mittelwände seitlich an Behältergruppen einer ersten Behälterreihe herangeführt und danach Behältergruppen einer zweiten Behälterreihe den Mittelwänden zugeordnet und anschließend Zuschnitte des Tragbehälters um die Behältergruppen mit den Mittelwänden gelegt werden.

Die US 4 469 222 offenbart einen Behälterträger mit einem kastenförmigen Tragbehälter und einer Mittelwand, die über Stirnlaschen mit den Stirnwänden des Tragbehälters verbunden ist. Bei sämtlichen Ausführungen sind die Stirnlaschen aus miteinander verklebten Klebelaschen gebildet. Bei diesen Behälterträgern sind die Stirnlaschen im unteren Bereich der beiden Stirnwände nur auf einer Seite der Mittelwand angeordnet, nämlich dort, wo sich über den wesentlichen Teil der Höhe der Mittelwand erstrecken. Dabei ist jeweils nur eine der Stirnwandhälften an jeder Stirnwand im unteren Bereich durch eine Stirnlasche bedeckt. Die jeweils benachbarte Stirnwandhälfte ist unten nicht bedeckt und kann unter Belastung durch in den Behälterträger eingesetzte Flaschen ausbeulen bzw. einreißen.

Außerdem ist der fertige Behälterträger nicht flach zusammenlegbar. Die Einzelteile müssen jeweils für sich flachliegend in Stapeln gelagert und transportiert werden. Beim Abfüller müssen sie gefaltet, zusammengesetzt und verklebt werden.

Die NL-A-870 19 65 offenbart einen flach zusammenlegbaren Behälterträger. Die Faltbarkeit des Behälterträgers ist insbesondere dadurch gewährleistet, dass die Mittelwand zwischen Laschen des Tragbehälters gehalten ist, die von den Mittelfaltlinien der Stirnwände aus nach innen gefaltet sind. Die Stirnwandhälften beider Stirnwände bestehen jeweils nur aus einer Lage faltbaren Flachmaterials.

Die US-A-2 665 049 offenbart einen Behälterträger aus einem Tragbehälter, einem Quertrennteil und einem Längstrennteil bzw. Griff. Der Tragbehälter hat Stirnwände, die von ineinander greifenden und überlappenden Stirnwandklappen und dagegen gefalteten Bodenwandklappen gebildet werden. Die Bodenwandklappen haben oben Umschlaglaschen, die gegen die Innenseiten der Stirnwandklappen gefaltet sind.

Die Mittelwand hat an den Enden zu beiden Seiten vorstehende Stirnlaschen. Die Umschlaglaschen werden gegen die Innenseiten der Stirnlaschen gefaltet. Mittels Heftklammern werden die Stirnwände aus den Stirnwandklappen, Bodenwandklappen und Stirnlaschen im Bereich der Umschlaglaschen zusammengehalten.

Dieser Behälterträger hat sehr aufwendige Stirnwände aus vier übereinander liegenden Lagen faltbaren Flachmaterials. Diese sind nur im Oberbereich an den Umschlaglaschen miteinander verbunden. Der Behälterträger ist deshalb zwar materialaufwendig, hat aber an den Stirnseiten durch die nur linienförmigen Verbindungen in dem nicht besonders beanspruchten Oberbereich eine nur verhältnismäßig geringe Festigkeit.

Des Weiteren ist der Behälterträger nicht flach zusammenlegbar. Ein Zusammenklappen ist bei dieser Konstruktion insbesondere aufgrund der Aussteifung durch das unterhalb des Mittelteiles positionierte Quertrennteil, aber auch durch die an die Bodenwand angelenkten Bodenwandklappen nicht möglich.

Davon ausgehend liegt der Erfindung die Aufgabe zugrunde, einen Behälterträger zur Verfügung zu stellen, der in den Brauereien beim Abfüller einfacher applizierbar ist und Belastungen besser Stand hält.

Die Aufgabe wird durch einen Behälterträger mit den Merkmalen des Anspruches 1 gelöst. Vorteilhafte Ausgestaltungen des Behälterträgers sind in den Unteransprüchen an gegeben.

Ein erfindungsgemäßer Behälterträger hat eine kastenförmigen, vorzugsweise oben offenen Tragbehälter aus einem ersten faltbaren Flachmaterial mit einer Bodenwand, Seitenwänden und Stirnwänden. Das erste faltbare Flachmaterial ist ein Kraftkarton. Ferner hat der Behälterträger eine zu den Seitenwänden parallele Mittelwand, vorzugsweise mit einem daran angeordneten Traggriff, die aus einem weiteren faltbaren Flachmaterial besteht und herausgefaltete Querklappen zum Bilden von Gefachen für die Behälter aufweist. Das zweite faltbare Flachmaterial ist ein Recycling-Karton, der vorzugsweise ungestrichen ist. Vorzugsweise ist der Tragbehälter aus einem einteiligen Zuschnitt des Kraftkartons und vorzugsweise ist die Mittelwand aus einem einteiligen Zuschnitt des Recycling-Kartons gebildet. Die Stirnwände haben eine in Querrichtung gerichtete Mittelfaltlinie und die Bodenwand eine in Längsrichtung gerichtete Mittelfaltlinie zum flachen Zusammenlegen des Behälterträgers. Ferner hat der Tragbehälter an sämtlichen Stirnwänden auf beiden Seiten der Mittelfaltlinie gesonderte Verstärkungen durch zusätzlich mit den Stirnwänden mittels eines Klebstoffes oder Leimes verbundene Lagen faltbaren Flachmaterials. Die Verstärkungen sind zumindest in den unteren Abschnitten der Stirnwände angeordnet. Sie weisen mindestens einen an den unteren Rand der Stirnwand angelenkten und gegen diese geklappten Verstärkungsabschnitt auf und/oder mindestens eine Stirnlasche an einem benachbarten Ende der Mittelwand und/oder mindestens ein von der Mittelwand abgetrenntes Verstärkungsteil.

Durch die verschiedenen Materialien von Tragbehälter und Mittelwand wird unter verringertem Aufwand ein formstabiler und tragesicherer Behälterträger erreicht. Aufwandsänderungen ergeben sich daraus, daß der teure Kraftkarton nur für den Tragbehälter (Mantel) verwendet wird, wogegen für die Mittelwand ein sehr preiswerter Recycling-Karton verwendet wird. Dieser übernimmt ebenfalls tragende Funktion, die durch mehrlagige Ausführung und Verklebung bzw. andere Verbindung der Lagen miteinander und der Mittelwand mit dem Tragbehälter noch verstärkt werden kann. Infolgedessen kann die Fläche des Tragbehälters gegenüber herkömmlichen, insgesamt aus Kraftkarton bestehenden Behälterträgern reduziert werden. Weitere Einsparungen ergeben sich dadurch, daß durch die Herstellung von Tragbehälter und Mittelwand aus verschiedenen Materialien eine günstigere Materialausnutzung ("Bogenaufteilung") und eine höhere Druckrate erreicht werden. Zur weiteren Aufwandänderung kann ungestrichenes Material für die Mittelwand verwendet und auf eine Bedruckung der Mittelwand völlig verzichtet werden.

Grundsätzlich können die Zuschnitte für Tragbehälter und Mittelwand wie bei den eingangs erwähnten Konstruktionen ausgeführt werden, vorzugsweise als einteilige Zuschnitte. Der Tragbehälter kann an den Querseiten aneinandergelenkte Seiten- und Stirnwände haben, wobei lediglich zwischen einer Seitenwand und einer Stirnwand eine Verbindung durch eine Seitenlasche einer dieser beiden Wände gegeben ist. Dann hat der Tragbehälter zwei völlig geschlossene Stirnwände, die ein ungeteiltes Druckbild erlauben, das nicht durch Passerdifferenzen gestört wird. Solche Passerdifferenzen können bei geteilten Stirnwänden auftreten, deren Stirnwandabschnitte überlappende Stirnwandlaschen haben, die miteinander verklebt sind. Der Tragbehälter kann aber auch nur eine völlig geschlossene Stirnwand haben, an der der vorerwähnte Vorteil bezüglich des Druckbildes zu Tragen kommt, und eine geteilte Stirnwand aufweisen. Dabei kann der Tragbehälter an den Querseiten aneinandergelenkte Seiten- und Stirnwände aufweisen. Schließlich kann der Tragbehälter aber auch zwei geteilte Stirnwände haben. Er kann dann aus einem einteiligen Zuschnitt hergestellt sein, der zwei über Anlenkungen der Stirnwandlaschen verbundene Abschnitte aufweist. Somit können die unterschiedlichen Ausführungen spezielle Vorteile beim Faltprozeß aufweisen.

Bei Belastungstests von Tragbehältern mit einer einen Traggriff aufweisender Mittelwand, zeigt sich, daß besondere Belastungen und Verformungen an den Stirnwänden und den benachbarten Bereichen der Längswände auftreten können. Zur Beseitigung dieser Nachteile wird erfindungsgemäß mindestens eine Stirnwand mit einer Verstärkung versehen, die vorzugsweise von mindestens einer zusätzlichen und mit ihr verbundenen Lage faltbaren Flachmaterials gebildet ist. Vorzugsweise ist diese Verstärkung zumindest in einem unteren Abschnitt der Stirnwand angeordnet. Sie kann von einem an die Stirnwand angelenkten und gegen diese geklappten Verstärkungsabschnitt, von einer Stirnlasche an der Mittelwand oder von einem von der Mittelwand abgetrennten Verstärkungsteil. Auch ist es möglich, daß bei ein und demselben Behälterträger verschiedene Ausführungen der Verstärkung realisiert sind, z. B. eine Stirnlasche an einem Ende der Mittelwand und Verstärkungsabschnitte, die den übrigen Abschnitten der Stirnwände zugeordnet sind.

Ferner sind Ausgestaltungen der Mittelwand vorteilhaft, bei denen diese ausgehend vom Tragegriff bis zu ihrer Verbindung mit mindestens einer Stirnwand, Bodenwand und/oder der Seitenwand des Tragbehälters mehrlagig mit einer Verbindung zwischen den Lagen ausgeführt ist, insbesondere wenn es sich um eine flächige Verbindung mittels eines Klebstoffes oder Leimes handelt. Die solchermaßen verstärkten Bereiche der Mittelwand bewirken die Kraftüberleitung vom Traggriff in den Tragbehälter und fördern die Stabilität des besonders belasteten Tragegriffs und des gesamten Behälterträgers.

Die Erfindung wird nachfolgend anhand der anliegenden Zeichnungen von Ausführungsbeispiele näher erläutert. In den Zeichnungen zeigen:
- Fig. 1: flach ausgebreiteter Zuschnitt eines Tragbehälters eines Behälterträgers mit völlig geschlossenen Stirnwänden in der Draufsicht;
- Fig. 2: flach ausgebreiteter Zuschnitt einer Mittelwand desselben Behälterträgers in der Draufsicht;
- Fig. 3: die flach angeordnete Mittelwand desselben Behälterträgers in der Draufsicht;
- Fig. 4: den Behälterträger flach liegend in der Draufsicht;
- Fig. 5: flach ausgebreiteter Zuschnitt eines Tragbehälters eines Behälterträgers mit nur einer völlig geschlossenen Stirnwand in der Draufsicht;
- Fig. 6: flach ausgebreiteter Zuschnitt einer Mittelwand desselben Behälterträgers in der Draufsicht;
- Fig. 7: flach ausgebreiteter Zuschnitt eines Tragbehälters eines Behälterträgers mit zwei geteilten Stirnwänden in der Draufsicht;

Fig. 8 flach ausgebreiteter Zuschnitt desselben Behälterträgers in der Draufsicht.

In der nachfolgenden Beschreibung der verschiedenen Ausführungsbeispiele werden für entsprechende Konstruktionselemente dieselben Bezugsziffern verwendet. Insoweit hat die Beschreibung für alle betroffenen Ausführungen Gültigkeit.

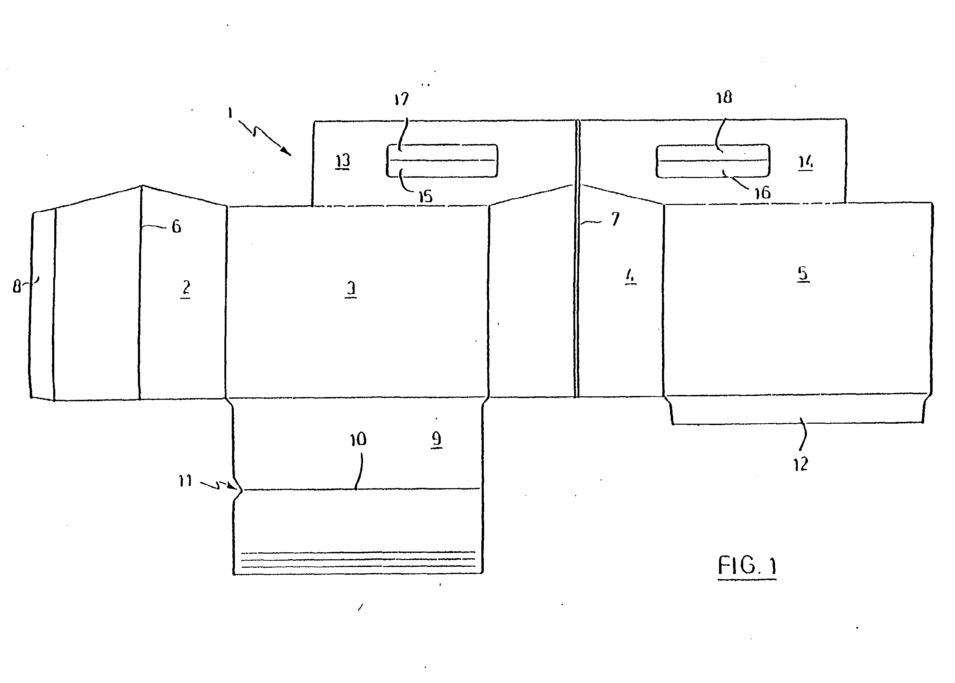

Gemäß Fig. 1 hat der aus einem Kraftkarton einteilig hergestellte Zuschnitt 1 für den Tragbehälter querseitig aneinandergelenkt eine Stirnwand 2, eine Seitenwand 3, eine Stirnwand 4 und eine Seitenwand 5. Die Stirnwände 2, 4 weisen jeweils eine Mittelfaltlinie 6, 7 auf. Letztere ist als Doppelfaltlinie ausgebildet. Der obere Rand der beiden Stirnwände 2, 4 ist jeweils von beiden Seiten zur Mittelfaltlinie 6, 7 hin ansteigend ausgebildet. Die Stirnwand 2 hat auf einer Seite eine Seitenlasche 8.

Die Seitenwände 3, 5 sind jeweils rechteckig ausgebildet. Die Seitenwand 3 hat am unteren Längsrand eine Bodenwand 9, die in Längsrichtung durch eine Mittelfaltlinie 10 unterteilt ist. An einem Ende der Mittelfaltlinie 10 hat die Bodenwand 9 eine Aufnahme 11 für einen Haken, die die Form eines einseitig offenen, mit der Spitze auf die Mittelfaltlinie ausgerichteten Dreieckes aufweist. Die Seitenwand 5 hat am unteren Rand eine Bodenlasche 12.

Am oberen Rand der Stirnwand 4 und eines Teils der Seitenwände 3, 5 hat der Zuschnitt 1 Griffabschnitte 13, 14, die symmetrisch bezüglich der Mittelfaltlinie 7 ausgebildet sind, die sich durch diese erstreckt. Die Griffabschnitte 13, 14 sind über verbrückte Stanzungen trennbar mit der Stirnwand 4 und den Seitenwänden 3, 5 verbunden. Sie haben jeweils eine Grifföffnung 15, 16 mit jeweils einer herausfaltbaren Lasche 17, 18 im oberen Randbereich, die einer schonenden Kraftüberleitung in die Handinnenfläche und Griffverstärkung dient.

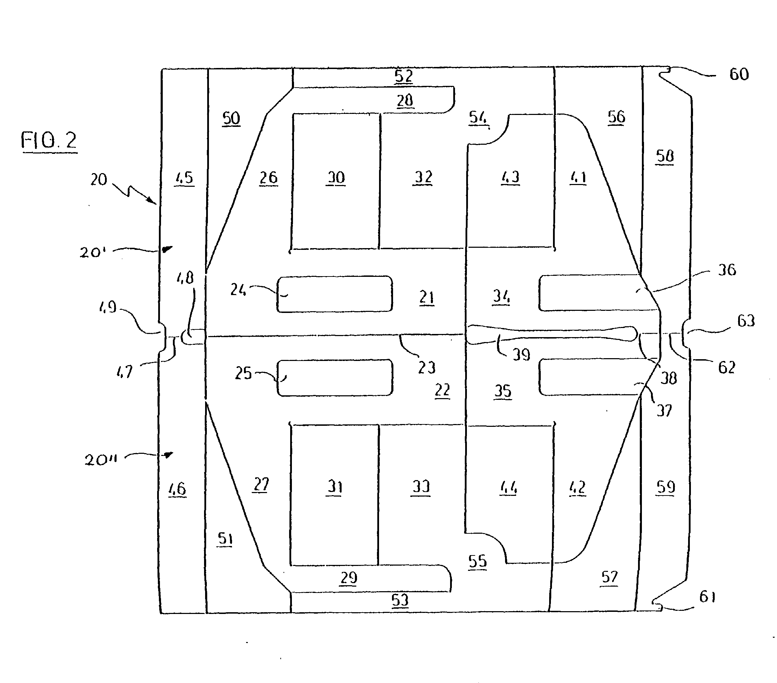

Der in Fig. 2 gezeigte Zuschnitt 20 für eine Mittelwand ist einteilig aus einem ungestrichenen Recycling-Karton gestanzt. Er hat zwei Abschnitte 20', 20'', die bei 23 längsseitig aneinandergelenkt sind. Die Abschnitte 20', 20'' haben Griffabschnitte 21, 22, die jeweils eine Grifföffnung 24, 25 aufweisen. Die Griffabschnitte 21, 22 haben jeweils einen seitlichen Verbindungsabschnitt 26, 27, der von der Anlenkung 23 wegerstreckt ist. Am Fuß jedes seitlichen Verbindungsabschnittes 26, 27 ist ein unterer Verbindungsabschnitt 28, 29 ausgebildet, der sich parallel zur Anlenkungslinie 23 erstreckt.

Im L-förmigen Winkelbereich zwischen dem Griffabschnitt 21 und dem seitlichen Verbindungsabschnitt 26 bzw. zwischen dem Griffabschnitt 22 und dem seitlichen Verbindungsabschnitt 27 ist jeweils an den seitlichen Verbindungsabschnitt 26 bzw. 27 eine Querklappe 30 bzw. 31 angelenkt, an die wiederum andererseits jeweils eine Querklappenverbindungslasche 32 bzw. 33 angelenkt ist.

An die Seite der Griffabschnitte 21, 22 gegenüber den seitlichen Verbindungsabschnitten 26, 27 sind innere Griffabschnitte 34, 35 gelenkt, die Grifföffnungen 36, 37 haben und teilweise komplementär zu den Griffabschnitten 21, 22 ausgeführt sind. Die inneren Griffabschnitte 34, 35 sind über eine Anlenkung 38 miteinander verbunden, die durch eine etwa hantelförmige Ausnehmung 39 unterbrochen ist. An der Seite gegenüber ihren Anlenkungen an die Griffabschnitte 21, 22 haben die inneren Griffabschnitte 34, 35 jeweils einen inneren Verbindungsabschnitt 41, 42, wobei sich die inneren Verbindungsabschnitte 41, 42 von der Aneinanderlenkung 38 der inneren Griffabschnitte 34, 35 weg erstrecken.

Im L-förmigen Winkelbereich zwischen den inneren Griffabschnitten 34, 35 und den inneren Verbindungsabschnitten 41, 42 sind Querklappen 43, 44 angeordnet, die einerseits an die inneren Verbindungsabschnitte 41 bzw. 42 und andererseits an die Querklappenverbindungslaschen 32, 33 gelenkt sind.

An die Seite der Griffabschnitte 21, 22, an der die seitlichen Verbindungsabschnitte 26, 27 angeordnet sind, sind Randlaschen 45, 46 angelenkt, die bei 47 aneinandergelenkt sind, wobei diese Aneinanderlenkung durch eine ovale Aussparung 48 und eine halb-ovale Aussparung 49 unterbrochen ist.

In Fortsetzung ihrer Anlenkung an die Griffabschnitte 21, 22 haben die Randlaschen 45, 46 angelenkte Stirnlaschen 50, 51. Auf der gegenüberliegenden Seite haben diese Stirnlaschen 50, 51 außen angelenkte Stirnseitenlaschen 52, 53, die über bogenförmige Abschnitte 54, 55 mit den Querklappenverbindungslaschen 32, 33 verbunden sind.

Ferner haben die Stirnseitenlaschen 52, 53 an dem ihrer Anlenkung an die Stimlaschen 50, 51 gegenüberliegenden Ende angelenkte, weitere Stirnlaschen 56, 57. Diese haben wiederum an der ihrer Anlenkung an die Stirnseitenlaschen 52, 53 gegenüberliegenden Seite weitere Randlaschen 58, 59 angelenkt, die jeweils an ihrem äußeren Rand eine Hakenabschnitt 60, 61 aufweisen. Ferner sind die weiteren Randlaschen 58, 59 bei 62 aneinandergelenkt, wobei diese Aneinanderlenkung an der Seite von einer halb-ovalen Ausnehmung 63 begrenzt ist.

Soweit die in der Fig. 2 dargestellten Linien gemäß vorstehender Beschreibung nicht als Verbindungs- bzw. Anlenkungslinien beschrieben sind, handelt es sich um Stanzlinien, die die benachbarten Bereiche des Recycling- oder Graukartons voneinander trennen.

### Der Zuschnitt 20 wird folgendermaßen zu einer Mittelwand weiterverarbeitet:

Zunächst werden die inneren Griffabschnitte 34, 35 gegen die Griffabschnitte 21 geklappt und mit diesen weitgehend flächig verklebt.

Danach werden die Randlaschen 45, 46 gegen die Innenseiten der Griffabschnitte 21, 22 und eines Teils der Verbindungsabschnitte 26, 27 geklappt und mit diesen verklebt. Ferner werden die weiteren Stirnlaschen 56, 57 um ihre Anlenkungen an die Stimseitenlaschen 52, 53 geklappt, wodurch die weiteren Randlaschen in Anlage an den inneren Griffabschnitten 34, 35 kommen, mit denen sie ebenfalls flächig verklebt werden.

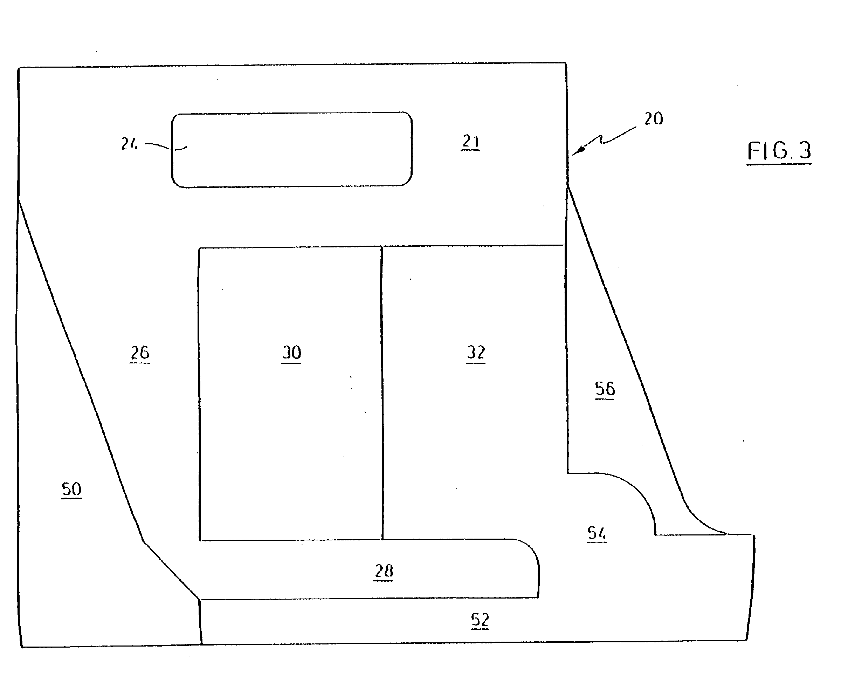

Danach werden die von den Griffabschnitten 21, 22 mit den zugehörigen seitlichen Verbindungsabschnitten 26, 27 gebildeten Mittelwandabschnitte mitsamt der darauf geklappten Teile zusammengeklappt, wobei der Randabschnitt 45 flächig mit dem Randabschnitt 46 verklebt wird, die davon nicht bedeckten Bereiche der Griffabschnitte 21, 22 und der seitlichen Verbindungsabschnitte 26, 27 flächig miteinander verklebt werden, der weitere Randabschnitt 58 flächig mit den weiteren Randabschnitt 59 verklebt wird und die davon nicht bedeckten Bereiche der inneren Griffabschnitte 34, 35 und die inneren Verbindungsabschnitte 43, 44 jeweils flächig miteinander verklebt werden. Anschließend befindet sich der Zuschnitt 20 in der in Fig. 3 gezeigten Konfiguration.

In dieser Konfiguration wird die Mittelwand 20 mit dem Zuschnitt 1 des Tragbehälters verbunden. Hierzu werden die Griffabschnitte 21, 22 flächig mit den Innenseiten der Griffabschnitte 13, 14 verklebt und die Stirnlaschen 50, 51 flächig mit den Innenseiten der Stirnwand 4 verklebt, wobei der angrenzende Rand der Mittelwand auf die Mittelfaltlinie 7 ausgerichtet wird. Ferner werden die Stirnseitenlaschen 52, 53, die bogenförmigen Abschnitte 54, 55 sowie die Querklappenverbindungslaschen 32, 33 jeweils flächig mit den Innenseiten der Seitenwände 3, 5 verklebt.

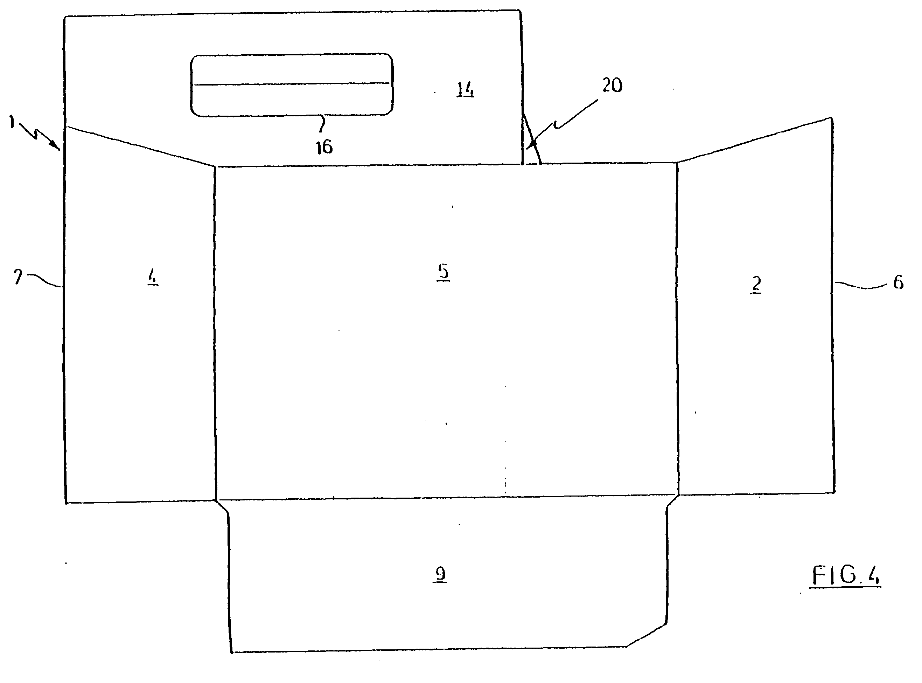

Danach kann der Zuschnitt 1 durch Verkleben der Seitenlasche 8 mit der Innenseite der Seitenwand 5 zu einem Mantel geschlossen werden. Außerdem kann die Bodenwand 9 durch Zusammenklappen um die Mittelfaltlinie 10 und Verkleben mit der Bodenlasche 12 geschlossen werden. Danach befindet sich der Zuschnitt 1 für den Tragbehälter in der in Fig. 4 gezeigten, flachliegenden Konfiguration mit eingebauter Mittelwand.

Zum Aufrichten des Behälterträgers muß dann nur noch gegen die Mittelfaltlinien 6, 7 gedrückt werden. Infolgedessen richten sich die Stirnwände 2, 4 senkrecht zu den Seitenwänden 3, 5 aus, richten sich die Querklappen 30, 31, 43, 44 senkrecht zu den Seitenwänden 3, 5 aus und wird der Boden 9 senkrecht zwischen den Seitenwänden 3, 5 aufgespannt. In der voll aufgespannten Anordnung kommen die weiteren Stirnlaschen 56, 57 an der Innenseite der Stirnwand 2 zur Anlage und schnappt der von den Hakenabschnitten 60, 61 gebildete Haken unter die Aufnahme 11 des Bodens, wodurch der Tragbehälter in der aufgerichteten Lage stabilisiert und der Boden unterstützt wird. Gegebenenfalls können die weiteren Stirnlaschen 56, 57 mit der Stirnwand 2 verklebt werden und/oder die Hakenausbildung entfallen.

Bei Vorhandensein eines Hakens 60, 61 kann allerdings der Behälterträger nach Gebrauch wieder flach zusammengelegt und entsorgt werden.

Außerdem ist besonders vorteilhaft, daß von den Grifföffnungen 15, 16 aus die Kraftüberleitung innerhalb des Zuschnittes 20 in den Zuschnitt 1 über mehrfach übereinandergelagerte und durch Verklebungen stabilisierte Lagen Graukarton erfolgt. Außerdem wird der Behälterträger am Umfang dadurch stabilisiert, daß die Stirnlaschen 50, 51, 56, 57 zusammen mit den Stirnseitenlaschen 52, 53 eine ringförmige Versteifung an der Innenseite des Tragbehälters bilden.

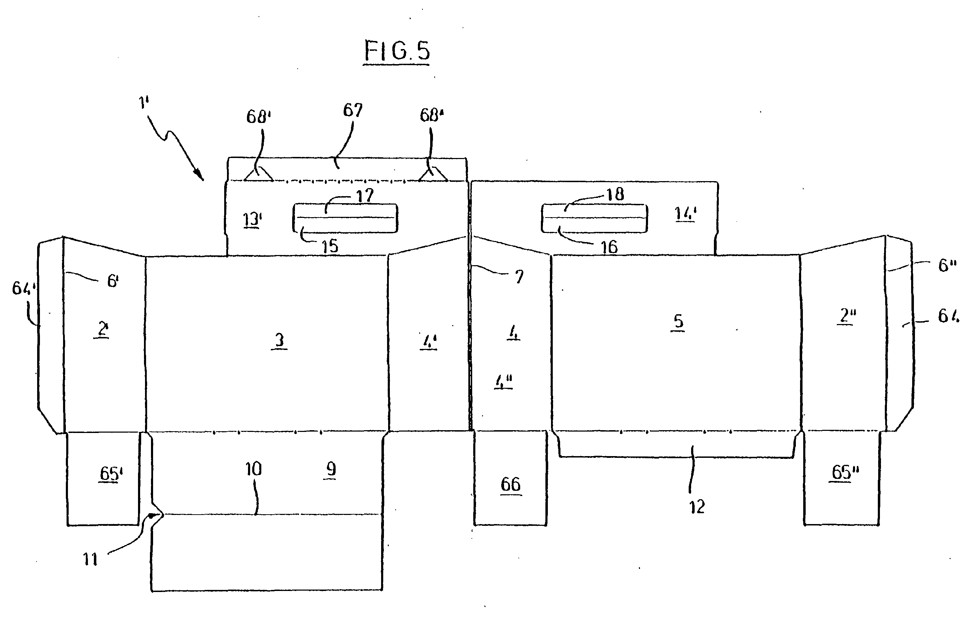

Gemäß Fig. 5 hat der aus einem Kraftkarton einteilig hergestellte Zuschnitt 1' für den Tragbehälter querseitig aneinandergelenkt einen Stirnwandabschnitt 2', eine Seitenwand 3, eine Stirnwand 4, eine Seitenwand 5 und einen weiteren Stirnwandabschnitt 2''. Die Stirnwand 4 ist durch eine Mittelfaltlinie 7 in Stirnwandabschnitte 4', 4'' geteilt. Die Stirnwandabschnitte 2, 2'' haben an der von den Seitenwänden 3, 5 abgewandten Seiten jeweils eine bei 6', 6'' angelenkte Stirnwandlasche 64', 64''.

Die Seitenwand 3 hat am unteren Längsrand eine Bodenwand 9, die in Längsrichtung durch eine Mittelfaltlinie 10 unterteilt ist. An einem Ende der Mittelfaltlinie 10 hat die Bodenwand 9 eine Aufnahme 11 für einen Haken. Die Seitenwand 5 hat am unteren Rand eine angelenkte Bodenlasche 12.

An die unteren Ränder der Stirnwandabschnitte 2', 2'' und des rechten Stirnwandabschnittes 4'' der Stirnwand 4 sind rechteckige Verstärkungsabschnitte 65', 65'', 66 angelenkt. Deren Breite entspricht beinahe der der sie tragende Stirnwandabschnitte 2', 2", 4". Ihre Höhe ist etwa halb so groß wie die der sie tragenden Stimwandabschnitte 2', 2'', 4''.

Am oberen Rand der Stirnwand 4 und eines Teils der Seitenwände 3, 5 hat der Zuschnitt 1 Griffabschnitte 13', 14', die symmetrisch bezüglich der Mittelfaltlinie 7 angeordnet sind, die sich durch diese erstreckt. Die Griffabschnitte 13', 14' sind über verbrückte Stanzungen trennbar mit der Stirnwand 4 und den Seitenwänden 3, 5 verbunden. Sie haben jeweils eine Grifföffnung 15, 16 mit jeweils einer herausfaltbaren Lasche 17, 18 im oberen Randbereich. Der Griffabschnitt 13' hat oben eine Griffrandlasche 67 angelenkt. Diese weist im Anlenkungsbereich trapezförmige Einstecköffnungen 68', 68'' auf. Die Griffrandlasche 67 dient der Griffverstärkung und der zusätzlichen Fixierung einer Mittelwand.

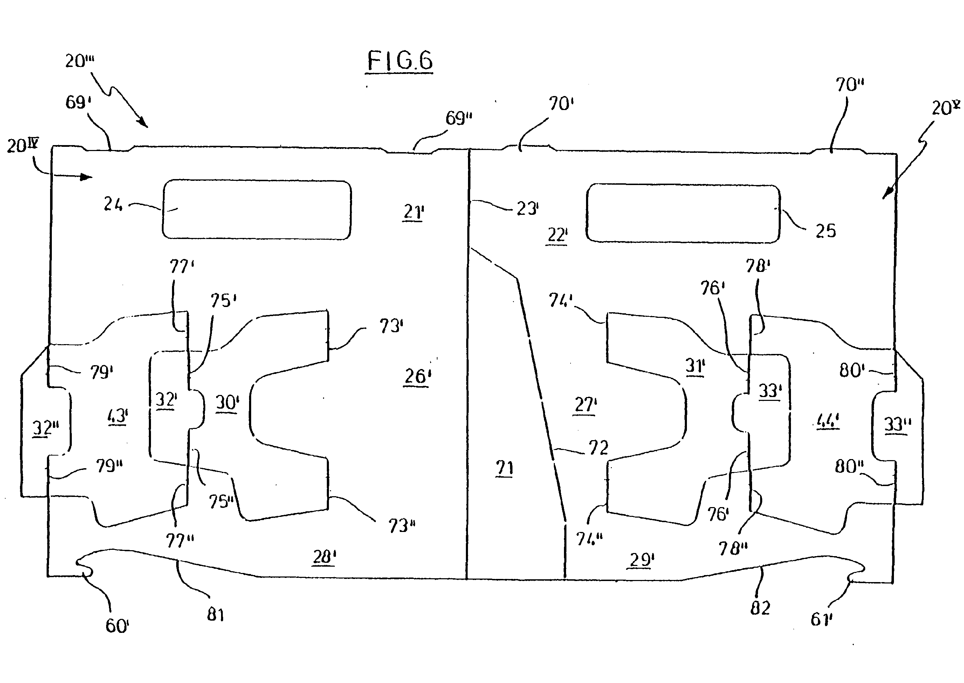

Ein Zuschnitt 20''' der Mittelwand ist in Fig. 6 gezeigt. Dieser ist einteilig aus einem ungestrichenen Recycling-Karton gestanzt. Er hat zwei Abschnitte 20^{IV}, 20^{V}, die bei 23' längsseitig aneinandergelenkt sind. Die Abschnitte 20^{IV}, 20^{V} haben Griffabschnitte 21', 22', die jeweils eine Grifföffnungen 24, 25 aufweisen. Der Griffabschnitt 21' hat am oberen Randbereich trapezförmige Ausschnitte 69', 69". Der Griffabschnitt 22' hat am oberen Rand trapezförmige Stecklaschen 70', 70''.

Die Griffabschnitte 21', 22' haben unten jeweils einen seitlichen Verbindungsabschnitte 26', 27', der von der Anlenkung 23' weg erstreckt ist. Der Abschnitt 20^{V} hat neben dem seitlichen Verbindungsabschnitt 27' eine Stirnlasche 71. Diese ist einerseits in der Fortsetzung der Anlenkung 23' an den seitlichen Verbindungsabschnitt 26' angelenkt und andererseits über eine verbrückte Stanzung 72 mit dem seitlichen Verbindungsabschnitt 27' verbunden. Die verbrückte Stanzung 72 hat am unteren Rand des Abschnitts 20^{V} einen Abstand vom seitlichen Verbindungsabschnitt 26' und nähert sich mit zunehmender Höhe allmählich diesem an, bis sie die Anlenkung 23' schneidet. Somit ist die Stirnlasche 71 aus dem Abschnitt 20^{V} herausklappbar.

Vom Fuß jedes seitlichen Verbindungsabschnitts 26', 27' ist ein unterer Verbindungsabschnitt 28', 29' etwa senkrecht zur Anlenkung 23' wegerstreckt.

Im L-förmigen Winkelbereich zwischen dem Griffabschnitt 21' und dem seitlichen Verbindungsabschnitt 26' bzw. zwischen dem Griffabschnitt 22' und dem seitlichen Verbindungsabschnitt 27' ist jeweils an den seitlichen Verbindungsabschnitt 26' bzw. 27' eine Querklappe 30' bzw. 31' angelenkt, an die wiederum andererseits jeweils eine Querklappenverbindungslasche 32' bzw. 33' angelenkt ist. Damit die Querklappen 30', 31' um ihre Anlenkungslinie 73', 73" und 74', 74'' aus den Abschnitten 20^{IV}, 20^{V} herausgeklappt werden können, sind sie von diesen im übrigen durch (verbrückte) Stanzungen getrennt. Entsprechendes gilt für die Querklappenverbindungslaschen 32', 33', die über voneinander beabstandete Anlenkungen 75', 75'' und 76', 76'' mit den Querklappen 30', 31' verbunden sind.

Zudem sind über Anlenkungen 77', 77'' und 78', 78'' Querklappen 43', 43'' an vorspringende Abschnitte von Griffabschnitt 21' und unterem Verbindungsabschnitt 28' sowie Griffabschnitt 22' und unterem Verbindungsabschnitt 29' gelenkt. Die Querklappen 43', 43'' haben ebenfalls anderenends bei 79', 79'' und 80', 80'' angelenkte Querklappenverbindungslaschen 32'', 33''. Die Querklappen 43', 44' und die Querklappenverbindungslaschen 32'', 33'' sind im übrigen ebenfalls so durch (verbrückte) Stanzlinien begrenzt, daß sie um ihre Anlenkungen schwenkbar sind.

Die unteren Verbindungsabschnitte 28', 29' weisen über die nahe ihrem von den seitlichen Verbindungsabschnitten 26', 27' entfernten Ende einen Hakenabschnitt 60', 61' auf, dem jeweils ein etwas zurückspringender unterer Randbereich 81, 82 des unteren Verbindungsabschnitts 28', 29' vorgeordnet ist.

Für die Herstellung eines Behälterträgers werden zunächst die Verbindungsabschnitte 65', 65'' und 66 gegen die Innenseiten der Stirnwandabschnitte 2', 2'', 4'' geklappt und mit diesen verklebt. Dann wird der Zuschnitt 20''' so auf der Innenseite des Zuschnitts 1' plaziert, daß die Anlenkung 23' etwa auf der Mittelfaltlinie 7 und die Stecklaschen 70', 70'' über den Einstecköffnungen 68', 68'' angeordnet sind. Dabei werden der Griffabschnitt 21' mit dem Griffabschnitt 14', der Griffabschnitt 22' mit dem Griffabschnitt 13', die Stirnlasche 71 mit dem Stirnwandabschnitt 4', die Querklappenverbindungslaschen 32', 32'' mit der Seitenwand 5 und die Querklappenverbindungslaschen 33',33'' mit der Seitenwand 3 verklebt.

Ferner wird die Griffrandlasche 67 gegen den Griffabschnitt 21 geklappt und mit diesem verklebt, wobei die Steckzungen 70', 70'' von den Einstecköffnungen 68', 68'' eingefangen werden.

Danach werden die Stirnwandabschnitte 2', 2'' nach innen geklappt und die Stirnwandlaschen 64', 64'' mit den Griffabschnitten 22', 21' und den unteren Verbindungsabschnitten 29', 28' verklebt.

Ferner werden die durch die Mittelfaltlinie 7 getrennten Abschnitte des Zuschnitts 1 gegeneinander geklappt. Dabei werden die Stirnwandabschnitte 64', 64'', die Griffabschnitte 21', 22", die seitlichen Verbindungsabschnitte 26', 27' und die unteren Verbindungsabschnitte 28', 29' jeweils miteinander verklebt.

Schließlich wird die Bodenwand 9 um die Mittelfaltlinie 10 gegen die Bodenlasche 12 gefaltet und mit dieser verklebt.

Der solchermaßen konfektionierte Behälterträger läßt sich einfach aufrichten, indem gegen die Mittelfaltlinie 7 und die von dieser entfernten Querseiten der Seitenwände 3, 5 gedrückt wird. Dabei werden die Querklappen 30', 31', 43', 44' und die Stimlasche 71 jeweils unter Zerstörung noch vorhandener Brücken ihrer Stanzungen aus der Mittelwand 20''' herausgeklappt. Ferner wird der Boden 9 aufgespannt und läßt sich mit seiner Aufnahme 11 in den Haken 60', 61' einschnappen, wodurch die gesamte Konstruktion in aufgerichteter Lage stabilisiert wird.

Der resultierende Behälterträger ist an der Stirnwand 2', 2'' durch die Verstärkungsabschnitte 65', 65'' und an der Stirnwand 4 durch den Verstärkungsabschnitt 66 sowie die innen angeklebte Stirnlasche 71 verfestigt.

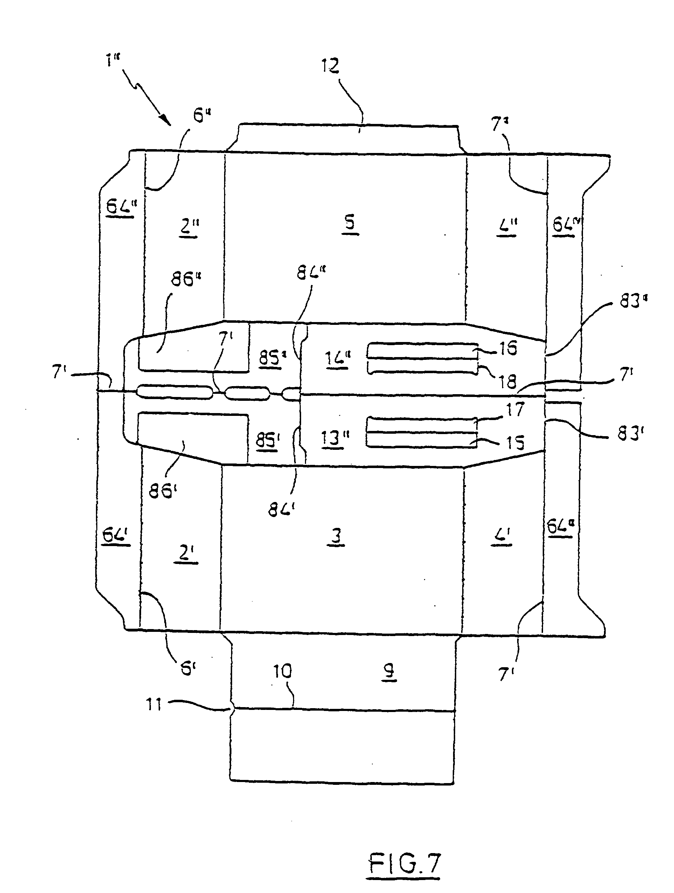

Der in Fig. 7 gezeigte Zuschnitt 1'' für einen Tragbehälter ist aus einem Kraftkarton einteilig hergestellt. Bei ihm sind ein Stirnwandabschnitt 2', eine Seitenwand 3 und ein Stirnwandabschnitt 4' querseitig aneinandergelenkt. Die Seitenwand 3 hat am unteren Längsrand eine Bodenwand 9, die in Längsrichtung durch eine Mittelfaltlinie 10 unterteilt ist. Auf der Mittelfaltlinie 10 ist wiederum eine Aufnahme 11 für einen Haken vorhanden.

Ferner hat der Zuschnitt einen Stirnwandabschnitt 2'', eine Seitenwand 5 und einen Stirnwandabschnitt 4'', die ebenfalls querseitig aneinandergelenkt sind. Am unteren Längsrand der Seitenwand 5 ist eine Bodenlasche 12 angelenkt.

An die Querseiten der Stirnwandabschnitte 2', 2'', die deren Anlenkungen an die Seitenwände 3, 5 gegenüberliegen, sind bei 6', 6'' Stirnwandlaschen 64', 64'' angelenkt. Entsprechend sind an die Querseiten der Stirnwandabschnitte 4', 4'', die deren Anlenkungen an die Seitenwände 3, 5 gegenüberliegen, bei 7', 7'' Stirnwandlaschen 64''', 64^{IV} angelenkt.

Der Zuschnitt 1'' hat zwei Abschnitte, die über eine längsgerichtete Mittelfaltlinie 7' miteinander verbunden sind. Über diese Anlenkung 7' sind direkt die Stirnwandlaschen 64', 64'' miteinander verbunden. Außerdem sind über die Anlenkung 7' Griffabschnitte 13", 14'' miteinander verbunden, die querseitig bei 83', 83" an die Stirnwandlaschen 64''', 64^{IV} gelenkt sind. Die Griffabschnitte 13", 14" weisen Grifföffnungen 15, 16 und herausfaltbare Laschen 17, 18 auf. Zudem sind die Griffabschnitte 13'', 14'' an den einander zugewandten oberen Rändern der Seitenwände 3, 5 und Stirnwandabschnitte 4', 4'' über verbrückte Stanzungen lösbar befestigt.

An die Querseite der Griffabschnitte 13'', 14'' gegenüber deren Anlenkungen 83', 83'' sind bei 84', 84'' innere Griffabschnitte 85', 85'' angelenkt, zwischen denen sich ebenfalls die Anlenkung 7' erstreckt, die dort teilweise durch Ausstanzungen unterbrochen ist. Die inneren Griffabschnitte 85', 85'' weisen im Mittelbereich größere Ausstanzungen 86', 86'' auf, so daß nach einem Klappen um die Anlenkungen 84', 84'' gegen die Griffabschnitte 13'', 14'' deren Grifföffnungen 15, 16 frei bleiben. Zum Klappen um die Anlenkungen 84', 84'' sind die inneren Griffabschnitte 85', 85'' lediglich über verbrückte Stanzungen mit den Seitenwänden 3, 5 und Stirnwandlaschen 64', 64'' verbunden.

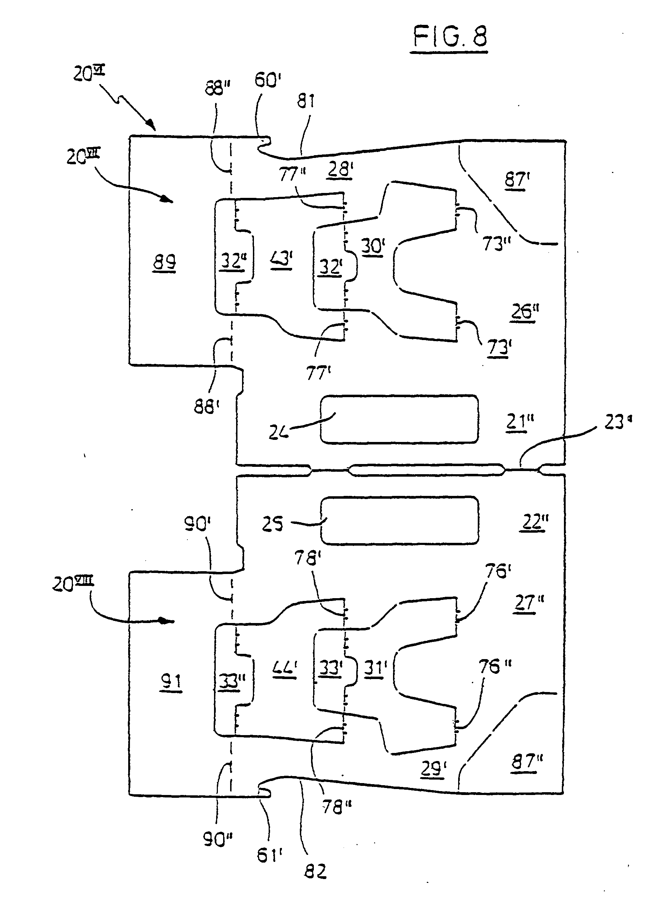

Der in Fig. 8 gezeigte Zuschnitt 20^{VI} für eine zugehörige Mittelwand ist wiederum einteilig aus einem ungestrichenen Recycling-Karton gestanzt. Er hat zwei Abschnitte 20^{VII}, 20^{VIII}, die bei 23'' längsseitig aneinandergelenkt sind, wobei diese Anlenkung durch Ausstanzungen unterbrochen ist.

Angrenzend an die Anlenkung 23'' haben die Abschnitte 20^{VII}, 20^{VIII} jeweils einen Griffabschnitt 21'', 22'', die jeweils eine Grifföffnung 24, 25 aufweisen. Die Griffabschnitte 21'', 22'' haben jeweils einen seitlichen Verbindungsabschnitt 26", 27", der von der Anlenkung 23'' weg erstreckt ist. Am Fuß der seitlichen Verbindungsabschnitte 26", 27'' sind über verbrückte Stanzlinien etwa dreieckförmigeVerstärkungsteile 87', 87" lösbar fixiert. Ferner erstreckt sich vom Fuß der seitlichen Verbindungsabschnitte 26'', 27'' jeweils ein unterer Verbindungsabschnitt 28', 29' etwa parallel zur Anlenkung 23''. Am unteren Rand der unteren Verbindungsabschnitte 28', 29' sind wiederum ein Hakenabschnitt 60', 61' und ein vorgeordneter zurückspringender Randbereich 81, 82 ausgebildet.

An die seitlichen Verbindungsabschnitte 26', 27'' sind über Anlenkungen 73', 73'' und 76', 76'' Querklappen 30', 31' angelenkt. Diese sind mit Querklappenverbindungslaschen 32', 33' versehen. Ferner sind an die Griffabschnitte 21'', 22'' bei 77', 78' und die unteren Verbindungsabschnitte 28', 29' bei 77'', 78'' Querklappen 43', 44' gelenkt. Diese weisen wiederum Querklappenverbindungslaschen 32'', 33'' auf.

Schließlich sind an den Griffabschnitt 21'' bei 88' und den unteren Verbindungsabschnitt 28' bei 88'' eine Stirnlasche 89 und an den Griffabschnitt 22'' bei 90' und den unteren Verbindungsabschnitt 29' bei 90'' eine Stirnlasche 91 angelenkt. Die Stirnlaschen 89, 91 haben eine etwa rechteckige Form.

Für den Zusammenbau eines Behälterträgers werden die inneren Griffabschnitte 85', 85" des Zuschnittes 1" gegen die Innenseiten der Griffabschnitte 13", 14" gefaltet und mit diesen verklebt. Dann wird der Zuschnitt 20^{VI} gegen die Innenseite des Zuschnitts 1'' gelegt, so daß die Anlenkungen 23'' und 7' zur Deckung kommen und die äußeren Querseiten der seitlichen Verbindungsabschnitte 26'', 27'' etwa über den Anlenkungen 83', 83'' angeordnet sind.

Dabei werden die Griffabschnitte 21", 22" mit den Griffabschnitten 13'', 14'' bzw. 85', 85'' verklebt. Ferner werden die Querklappenverbindungslaschen 32', 32'' und 33', 33'' mit den Seitenwänden 3, 5 verklebt. Zudem werden die Verstärkungsabschnitte 87', 87'' mit den Stirnwandabschnitten 4', 4'' verklebt.

Danach werden die Stirnwandabschnitte 2', 2'' gegen den Zuschnitt 20^{VI} geklappt und mit den Stirnlaschen 89, 91 verklebt. Zugleich werden die Stirnwandlaschen 64', 64'' mit den Griffabschnitten 21'', 22'' verklebt. Zudem werden die Stirnwandlaschen 64''', 64^{IV} gegen die Griffabschnitte 21'', 22" und die seitlichen Verbindungsabschnitte 26'', 27'' geklappt und mit diesen verklebt.

Danach wird der Zuschnitt 1'' um die Faltlinie 7' zusammengeklappt. Dabei werden die Innenseiten der Stirnwandlaschen 64, 64" und der Stirnwandlaschen 64''', 64^{IV} jeweils miteinander verklebt. Außerdem werden die Griffabschnitte 21'', 22'', die seitlichen Verbindungsabschnitte 26'', 27'' und die unteren Verbindungsabschnitte 28', 29' jeweils miteinander verklebt. Schließlich wird die Bodenwand 9 um die Mittelfaltlinie 10 gefaltet und mit der Bodenlasche 12 verklebt.

Der fertige Behälterträger kann aus dem flachliegenden Zustand aufgerichtet werden, indem gegen die Anlenkung der Stirnwandabschnitte 4', 4'' und die Anlenkung der Seitenwände 3, 5 an die Stirnwandabschnitte 2', 2'' gedrückt wird. Dabei werden die Querklappen 30', 31', 43', 44' und die Stirnlaschen 89, 91 von der Mittelwand 22^{VI} weggeklappt und ggf. noch vorhandene Brücken der Stanzlinien aufgebrochen. Außerdem werden die Verstärkungsteile 87', 87'' von der Mittelwand 20^{VI} getrennt und bleiben an den Stirnwandabschnitten 4', 4'' zurück, wodurch deren untere Bereiche verstärkt werden. Die Stirnwandabschnitte 2', 2'' werden durch die Stirnlaschen 89, 91 verstärkt.

Ferner wird der Boden 9 aufgespannt und kann mit der Aufnahme 11 in den Haken 60', 61' eingehängt werden, um die aufgespannte Konstruktion zu stabilisieren.

## Patentansprüche

1. Behälterträger mit
- einem kastenförmigen Tragbehälter (1) aus einem ersten faltbaren Flachmaterial, mit einer Bodenwand (9), Seitenwänden (3, 5) und Stirnwänden (2, 4),
- einer zu den Seitenwänden (3, 5) parallelen Mittelwand (20) aus einem weiteren faltbaren Flachmaterial mit herausfaltbaren Querklappen (30, 31, 43, 44) zum Bilden von Gefachen für die Behälter, bei dem
- die Stirnwände (2, 4) eine in Querrichtung gerichtete Mittelfaltlinie (6, 7) und die Bodenwand (9) eine in Längsrichtung gerichtete Mittelfaltlinie (10) zum flachen Zusammenlegen des Behälterträgers haben,
- der Tragbehälter (1, 1', 1'') an sämtlichen Stirnwänden (2, 4) auf beiden Seiten der Mittelfaltlinie (6, 7) gesonderte Verstärkungen durch zusätzlich mit den Stirnwänden (2, 4) mittels eines Klebstoffes oder Leimes verbundene Lagen faltbaren Flachmaterials (50, 51, 56, 57; 65', 65'', 66, 71; 87', 87'', 89, 91) hat, wobei die Verstärkungen zumindest in den unteren Abschnitten der Stirnwände (2, 4) angeordnet sind, mindestens einen an den unteren Rand der Stirnwand (2, 4) angelenkten und gegen diese geklappten Verstärkungsabschnitt (65', 65'', 66) aufweisen und/oder mindestens eine Stirnlasche (50, 51, 56, 57; 71; 89, 91) an einem benachbarten Ende der Mittelwand aufweisen und/oder mindestens ein von der Mittelwand abgetrenntes Verstärkungsteil (87', 87") aufweisen,
- das erste faltbare Flachmaterial ein Kraftkarton und
- das zweite faltbare Flachmaterial ein Recycling-Karton ist.

2. Behälterträger nach Anspruch 1, bei dem die Verstärkungen mindestens einen zusätzlichen Verstärkungsteil aufweisen.

3. Behälterträger nach Anspruch 1 oder 2, bei dem der Tragbehälter (1) oben offen ist.

4. Behälterträger nach einem der Ansprüche 1 bis 3, bei dem oben an der Mittelwand (20) ein Traggriff (15, 16) angeordnet ist.

5. Behälterträger nach einem der Ansprüche 1 bis 4, bei dem der Tragbehälter aus einem einteiligen Zuschnitt (1) des ersten faltbaren Flachmaterials hergestellt ist.

6. Behälterträger nach einem der Ansprüche 1 bis 5, bei dem der Tragbehälter aus einem Zuschnitt (1) des ersten faltbaren Flachmaterials hergestellt ist, der bedruckt, gestanzt und geklebt ist.

7. Behälterträger nach einem der Ansprüche 1 bis 6, bei dem der Tragbehälter (1) an den Querseiten aneinandergelenkte Seiten- und Stirnwände (2 bis 5) mit einer eine Seitenwand (5) mit einer Stirnwand (2) querseitig verbindenden Seitenlasche (8) und an die Längsseiten der Seitenwände (3, 5) angelenkte Bodenwandabschnitte (9, 12) hat.

8. Behälterträger nach einem der Ansprüche 1 bis 7, bei dem der Tragbehälter (1') an den Querseiten aneinandergelenkte Seiten- und Stirnwände (2 bis 5), mindestens eine in Stirnwandabschnitte (2', 2'') geteilte Stirnwand (2) mit die Stirnwandabschnitte (2', 2") querseitig miteinander verbindenden Stirnwandlaschen (64', 64'') und an die Längsseiten der Seitenwände angelenkte Bodenwandabschnitte (9, 12) hat.

9. Behälterträger nach Anspruch 8, bei dem der Tragbehälter (1'') zwei geteilte Stirnwände (2, 4) hat und die miteinander verbundenen Stirnwandlaschen (64', 64"; 64''', 64^{IV}) um Anlenkungen (6', 6'', 7', 7'') gegeneinander geklappt sind.

10. Behälterträger nach einem der Ansprüche 1 bis 9, bei dem der Tragbehälter (1, 1', 1'') die Verstärkung zumindest in einem unteren Abschnitt einer Stirnwand (2, 4) hat.

11. Behälterträger nach einem der Ansprüche 1 bis 10, bei dem mindestens ein Stirnwandabschnitt (2', 2'', 4'') mindestens einen an dessen unteren Rand gelenkten Verstärkungsabschnitt (65', 65'', 66) aufweist.

12. Behälterträger nach einem der Ansprüche 1 bis 11, bei dem der Stirnwand (2, 4) auf beiden Seiten einer durch diese verlaufenden Mittelfaltlinie (6, 7) eine gesonderte Verstärkung zugeordnet ist.

13. Behälterträger nach einem der Ansprüche 1 bis 12, bei dem die Verstärkung an der Innenseite der Stirnwand (2, 4) angeordnet ist.

14. Behälterträger nach einem der Ansprüche 1 bis 13, bei dem der Tragbehälter (1) an einer Stirnwand (4) Grifföffnungen (15, 16) aufweisende Griffabschnitte (13, 14) hat, die um eine Mittelfaltlinie (7) in Fortsetzung der Mittelfaltlinie der Stirnwand gegen die Mittelwand geklappt und mit dieser verbunden sind.

15. Behälterträger nach einem der Ansprüche 1 bis 14, bei dem das zweite faltbare Flachmaterial ein ungestrichener Recycling-Karton ist.

16. Behälterträger nach einem der Ansprüche 1 bis 15, bei dem die Mittelwand aus einem einteiligen Zuschnitt (20) des Recycling-Kartons hergestellt ist.

17. Behälterträger nach einem der Ansprüche 1 bis 16, bei dem die Mittelwand aus einem Zuschnitt (20) des Recycling-Kartons hergestellt ist, der gestanzt und geklebt ist.

18. Behälterträger nach einem der Ansprüche 1 bis 17, bei dem die Mittelwand (20) oben mindestens einen eine Grifföffnung (24, 25) aufweisenden Griffabschnitt (21, 22) hat.

19. Behälterträger nach Anspruch 14 und 18, bei dem die Griffabschnitte (21, 22; 13, 14) der Mittelwand (20) und des Tragbehälters (1) mit deckungsgleich angeordneten Grifföffnungen (24, 25; 15, 16) miteinander verklebt sind.

20. Behälterträger nach einem der Ansprüche 1 bis 19, bei dem die Querklappen (30, 31, 43, 44) über Querklappenverbindungslaschen (32, 33) mit den Seitenwänden (3, 5) des Tragbehälters verbunden sind.

21. Behälterträger nach einem der Ansprüche 1 bis 20, bei dem die Mittelwand (20) an mindestens einem Ende über mindestens eine Stirnlasche (50, 51, 56, 57) mit der benachbarten Stirnwand (4, 2) verbunden sind.

22. Behälterträger nach Anspruch 7 und 21, bei dem die Mittelwand (20) an beiden Enden zwei auf verschiedenen Seiten derselben vorstehende Stirnlaschen (50, 51; 56, 57) hat, wobei die beiden Stirnlaschen (50, 51) an dem einen Ende mit der benachbarten Stirnwand (4) verbunden sind und die beiden Stirnlaschen (56, 57) an dem anderen Ende an der benachbarten Stirnwand (2) anliegen.

23. Behälterträger nach einem der Ansprüche 1 bis 22, bei dem die Mittelwand (20) Stirnlaschen (50, 51, 56, 57) hat, die über angelenkte Stirnseitenlaschen (52, 53) mit den Seitenwänden (3, 5) verbunden sind.

24. Behälterträger nach Anspruch 23, bei dem an verschiedenen Enden der Mittelwand (20) auf derselben Seite derselben angeordnete Stirnlaschen (50, 56 und 51, 57) jeweils eine gemeinsame Stirnseitenlasche (52, 53) aufweisen.

25. Behälterträger nach Anspruch 23 oder 24, bei dem die Stirnseitenlaschen (52, 53) über einen Abschnitt (54, 55) mit einer Querklappenverbindungslasche (32, 33) jeweils derselben Seite der Mittelwand verbunden sind.

26. Behälterträger nach Anspruch 8 und 21, bei dem die Mittelwand (20''') an einem Ende eine Stirnlasche (71) hat, die mit der benachbarten Stirnwand (4) verbunden ist, die auf der anderen Seite der Mittelwand (20''') einen Verstärkungsabschnitt (66) hat, bei dem ferner die Mittelwand (20''') am anderen Ende mit den Stirnwandlaschen (64', 64'') der benachbarten Stirnwand (2', 2'') verbunden ist, die beidseits der Mittelwand (20''') Verstärkungsabschnitte (65', 65'') hat.

27. Behälterträger nach Anspruch 8 und 21, bei dem die Mittelwand (20VI) an beiden Enden mit den Stirnwandlaschen (64', 64''; 64''', 64IV) der benachbarten Stirnwände (2, 4) verbunden, an einem Ende beidseits über Stirnlaschen (89, 91) mit der benachbarten Stirnwand (2', 2'') verbunden ist und am anderen Ende von der Mittelwand (20^{VI}) abgetrennte Verstärkungsteile (87', 87'') mit der benachbarten Stirnwand (4', 4'') verbunden sind.

28. Behälterträger nach einem der Ansprüche 1 bis 27, bei dem die Mittelwand (20) am unteren Rand mindestens einen Haken (60, 61) und die Bodenwand (9) eine zugeordnete Aufnahme (11) für den Haken aufweist.

29. Behälterträger nach Anspruch 28, bei dem die Mittelwand (20) den Haken (60, 61) an einem Ende aufweist.

30. Behälterträger nach einem der Ansprüche 1 bis 29, bei dem die Mittelwand (20) vom Traggriff ausgehend bis zu ihrer Verbindung mit mindestens einer Stirnwand (4) und/oder der Bodenwand und/oder mindestens einer Seitenwand (9) mehrlagig mit einer Verbindung zwischen den Lagen ausgeführt ist.

31. Behälterträger nach einem der Ansprüche 1 bis 30, bei dem die Mittelwand (20) zusammengeklappte und miteinander im wesentlichen flächig verbundene Mittelwandabschnitte (20', 20'') aufweist.

32. Behälterträger nach Anspruch 31, bei dem die Mittelwandabschnitte (20', 20'') an Griffabschnitten (21, 22) längsseitig oder querseitig aneinandergelenkt sind und seitliche Verbindungsabschnitte (26, 27) aufweisen, welche Griffabschnitte (21, 22) und seitlichen Verbindungsabschnitte (26, 27) aneinanderliegen und miteinander verbunden sind, wobei in den Winkelbereichen zwischen den Griffabschnitten (21, 22) und den seitlichen Verbindungsabschnitten (26, 27) Querklappen (30, 31) und die Querklappenverbindungslaschen (32, 33) angeordnet sind.

33. Behälterträger nach Anspruch 32, bei dem die Mittelwandabschnitte (20', 20") vom unteren Ende der seitlichen Verbindungsabschnitte (26, 27) ausgehende, untere Verbindungsabschnitte (28, 29) unterhalb der Querklappen (30, 31) und Querklappenverbindungslaschen (32, 33) haben, welche unteren Verbindungsabschnitte (28, 29) aneinanderliegen und miteinander verbunden sind.

34. Behälterträger nach Anspruch 32 oder 33, bei dem die Mittelwand (20) an die andere Seite der Griffabschnitte (21, 22) gelenkte, innere Griffabschnitte (34, 35) aufweist, die aneinandergelenkt, gegen die Innenseite der Griffabschnitte (21, 22) geklappt und mit diesen verbunden sind und infolge des Zusammenklappens der Mittelwandabschnitte gegeneinander geklappt und miteinander verbunden sind.

35. Behälterträger nach Anspruch 34, bei dem die inneren Griffabschnitte (21, 22) an der von ihrer gegenseitigen Anlenkung (38) abgewandten Seite jeweils einen inneren Verbindungsabschnitt (41, 42) haben, wobei ihre inneren Verbindungsabschnitte (41, 42) infolge des Zusammenklappens der Mittelwandabschnitte gegeneinander geklappt und miteinander verbunden sind, wobei jeweils im Winkelbereich zwischen dem inneren Griffabschnitt (34, 35) und dem inneren Verbindungsabschnitt (41, 42) eine Querklappe (43, 44) an den jeweiligen inneren Verbindungsabschnitt (41, 42) angelenkt ist, der andererseits an eine benachbarte Querklappenverbindungslasche (32, 33) angelenkt ist.

36. Behälterträger nach einem der Ansprüche 32 bis 35, bei dem an die den seitlichen Verbindungsabschnitten (26, 27) zugeordnete Seite der Griffabschnitte (21, 22) aneinandergelenkte Randlaschen (45, 46) gelenkt sind, die gegen die Innenseiten der Griffabschnitte (21, 22) und der seitlichen Verbindungsabschnitte (26, 27) geklappt und mit diesen verbunden sind, infolge des Zusammenklappens der Mittelwandabschnitte gegeneinander geklappt und miteinander verbunden sind und in Fortsetzung ihrer Anlenkungslinie an die Griffabschnitte (21, 22) Stirnlaschen (50, 51) angelenkt haben, die mit einer benachbarten Stirnwand (4) des Tragbehälters verbunden sind.

37. Behälterträger nach einem der Ansprüche 32 bis 36, bei dem mit unteren Randbereichen der Querklappenverbindungslaschen (32, 33) Stirnseitenlaschen (52, 53) verbunden sind, die an einem sich von den Stirnlaschen (50, 51) wegerstreckten Abschnitt endseitig angelenkte weitere Stirnlaschen (56, 57) haben, die an der ihrer Anlenkung gegenüberliegenden Seite angelenkte, weitere Randlaschen (58, 59) haben, die aneinander angelenkt sind, wobei die weiteren Stirnlaschen (56, 57) um ihre Anlenkungen an die Stirnseitenlaschen (52, 53) geklappt sind, die weiteren Randlaschen (58, 59) gegen die inneren Griffabschnitte (34, 35) geklappt und mit diesen verbunden sind und die weiteren Randlaschen (58, 59) infolge des Zusammenklappens der Mittelwandabschnitte gegeneinander geklappt und miteinander verbunden sind.

38. Behälterträger nach Anspruch 37, bei dem die weiteren Randlaschen (58, 59) am unteren Rand jeweils einen Hakenabschnitt (60, 61) haben, wobei die Hakenabschnitte deckungsgleich gegeneinander geklappt sind.

39. Behälterträger nach Anspruch 33 und 37 oder 38, beidem die unteren Verbindungsabschnitte (28, 29) mit den weiteren Randlaschen (58, 59) verbunden sind.

40. Behälterträger nach Anspruch 32 oder 33, bei dem ein Mittelwandabschnitt (20V) eine ausgeklappte Stirnlasche (71) hat, die in Fortsetzung der querseitigen Anlenkung (23') an den anderen Mittelwandabschnitt (20IV) an letztere angelenkt ist.

41. Behälterträger nach Anspruch 32 oder 33, bei dem an mindestens einem Ende der Mittelwand (20VI) von beiden Mittelwandabschnitten (20VII, 20VIII) Verstärkungsteile (87', 87'') abgetrennt sind.

42. Behälterträger nach Anspruch 8 und 33, 40 oder 41, bei dem die unteren Verbindungsabschnitte (28', 29')mit Stirnwandlaschen (64', 64") der Stirnwandabschnitte (2', 2'') verbunden sind.

43. Behälterträger nach Anspruch 9 und 33, 41 oder 42, bei dem die seitlichen Verbindungsabschnitte (26'', 27") mit Stirnwandlaschen (64''', 64IV) der Stirnwandabschnitte (4', 4") verbunden sind.

44. Behälterträger nach Anspruch 42 oder 43, bei dem die Mittelwandabschnitte (20VII, 20VIII) jeweils an die Griffabschnitte (21'', 22'') und die unteren Verbindungsabschnitte (28', 29') angelenkte Stirnlaschen (89, 91) haben.

45. Behälterträger nach einem der Ansprüche 1 bis 44, bei dem die Verbindungen ganz oder zum Teil als Verklebungen ausgeführt sind.

## Claims

1. A container carrier with
- a box-shaped carrier container (1) of a first foldable flat material, with a floor wall (9), lateral walls (3, 5) and end walls (2, 4),
- a middle wall (20) parallel to the lateral walls (3, 5), of a further foldable flat material with transverse flaps (30, 31, 43, 44) which can be folded out, for forming compartments for the containers, in which
- the end walls (2, 4) have a middle fold line (6, 7) aligned in the transverse direction and the floor wall (9) has a middle fold line (10) aligned in the longitudinal direction for the flat folding together of the container carrier,
- at all end walls (2, 4) on both sides of the middle fold line (6, 7), the carrier container (1, 1', 1") has separate reinforcements by means of layers of foldable flat materials (50, 51, 56, 57; 65', 65", 66, 71; 87', 87", 89, 91) additionally connected to the end walls (2, 4) by an adhesive or glue wherein the reinforcements are arranged at least at the lower parts of the end walls (2, 4), at least one reinforcement section (65', 65", 66) which is linked to the lower edge of the end wall (2, 4) and folded against this and/or at least one end tab (50, 51, 56, 57; 71; 89, 91) on a neighbouring end of the middle wall and/or at least one reinforcement part (87', 87") separated from the middle wall,
- the first foldable flat material is a reinforced cardboard and
- the second foldable flat material is a recycling cardboard.

2. A container carrier according to claim 1, wherein the reinforcements have at least an additional reinforcement part.

3. A container carrier according to claim 1 or 2, wherein the carrier container (1) is open at the top.

4. A container carrier according to one of the claims 1 to 3, wherein above on the middle wall (20) there is arranged a carrier grip (15, 16).

5. A container carrier according to one of the claims 1 to 4, wherein the carrier container is manufactured of a one-piece blank (1) of the first foldable flat material.

6. A container carrier according to one of claims 1 to 5, wherein the carrier container is manufactured from a blank (1) of the first foldable flat material which is pressed, punched and adhesed.

7. A container carrier according to one of the claims 1 to 6, wherein the carrier container (1) on the transverse sides has lateral and end walls (2 to 5) which are linked to one another, with a lateral tab (8) connecting a lateral wall (5) to an end wall (2) on the transverse side, and floor wall sections (9, 12) linked to the longitudinal sides of the lateral walls (3, 5).

8. A container carrier according to one of the claims 1 to 7, wherein the carrier container (1') on the transverse sides has lateral and end walls (2 to 5) linked to one another, at least one end wall (2) separated into end wall sections (2', 2"), with end wall tabs (64', 64") connecting end wall sections (2', 2") to one another on the transverse side, and floor wall sections (9, 12) linked to the longitudinal sides of the lateral walls.

9. A container carrier according to claim 8, wherein the carrier container (1'') has two parted end walls (2, 4) and the end wall tabs (64', 64", 64''', 64IV) connected to one another are folded against one another about the linkings (6', 6", 7', 7").

10. A container carrier according to one of claims 1 to 9, wherein the carrier container (1, 1', 1'') has the reinforcement at least in a lower section of the end wall (2, 4).

11. A container carrier according to one of claims 1 to 10, wherein at least one end wall section (2', 2", 4") comprises at least one reinforcement section (65', 65", 66) linked to its lower edge.

12. A container carrier according to one of claims 1 to 11, wherein to the end wall (2, 4) on both sides of a middle fold line (6, 7) running through these there is allocated a separate reinforcement.

13. A container carrier according to one of the claims 1 to 12, wherein the reinforcement is arranged on the inner side of the end wall (2, 4).

14. A container carrier according to one of the claims 1 to 13, wherein the carrier container (1) on an end wall (4) has grip sections (13, 14) which comprise grip openings (15, 16) and which are folded about a middle fold line (7) in continuation of the middle fold line, against the middle wall, and are connected to this.

15. A container carrier according to one of the claims 1 to 14, wherein the second foldable flat material is an uncoated recycling cardboard.

16. A container carrier according to one of claims 1 to 15, wherein the middle wall is manufactured of a one-piece blank (20) of recycling cardboard.

17. A container carrier according to one of the claims 1 to 16, wherein the middle wall is manufactured from a blank (20) of recycling cardboard which is punched and adhesed.

18. A container carrier according to one of the claims 1 to 17, wherein the middle wall (20) above has at least one grip section (21, 22) comprising a grip opening (24, 25).

19. A container carrier according to claim 14 and 18, wherein the grip sections (21, 22; 13, 14) of the middle wall (20) and of the carrier container (1) are adhesed together with grip openings (24, 25; 15, 16) equally overlapping.

20. A container carrier according to one of the claims 1 to 19, wherein the transverse flaps (30, 31, 43, 44) are connected to the lateral walls (3, 5) of the carrier container via transverse flap connecting tabs (32, 33).

21. A container carrier according to one of the claims 1 to 20, wherein the middle wall (20) on at least one end is connected to the neighboring end wall (4, 2) via at least one end tab (50, 51, 56, 57).

22. A container carrier according to claim 7 and 21, wherein the middle wall (20) at both ends has two end tabs (50, 51; 56, 57) projecting on differing sides thereof and wherein the two end tabs (50, 51) at the one end are connected to the neighboring lateral wall (4) and the two end tabs (56, 57) at the other end bear on the neighbouring end wall (2).

23. A container carrier according to one of the claims 1 to 22, wherein the middle wall (20) has end tabs (50, 51, 56, 57) which are connected to the lateral walls (3, 5) via linked end side tabs (52, 53).

24. A container carrier according 23, wherein at differing ends of the middle wall (20), end tabs (50, 56 and 51, 57) arranged on the same side of the middle wall in each case comprise a common end side tab (52, 53).

25. A container carrier according to claim 23 or 24, wherein the end side tabs (52, 53) via a section (54, 55) are connected to a transverse flap connecting tab (32, 33) in each case of the same side of the middle wall.

26. A container carrier according to claim 8 and 21 wherein the middle wall (20''') at one end has an end tab (71) which is connected to the neighboring end wall (4) which on the other side of the middle wall (20''') has a reinforcement section (66), wherein further the middle wall (20''') at the other end is connected to the end wall tabs (64', 64") of the neighboring end wall (2', 2") which on both sides of the middle wall (20''') has reinforcement sections (65', 65").

27. A container carrier according to claim 8 and 21, wherein the middle wall (20VI) at both ends are connected to the end wall tabs (64', 64", 64''', 64IV) of the neighboring end walls (2, 4), at one end on both sides is connected to the neighboring end wall (2', 2") via end tabs (89, 91), and at the other end reinforcement parts (87', 87'') separated from the middle wall are connected to the neighboring end wall (4', 4'').

28. A container carrier according to one of claims 1 to 27, wherein the middle wall (20) at the lower edge comprises at least one hook (60, 61) and the floor wall (9) comprises an allocated receiver (11) for the hook.

29. A container carrier according to claim 28, wherein the middle wall (20) comprises the hook (60, 61) at one end.

30. A container carrier according to one of claims 1 to 29, wherein the middle wall (20) proceeding from the carrier grip up to its connection to at least one end wall (4) and/or the floor wall and/or at least one lateral wall (9) is designed multi-layered with a connection between the layers.

31. A container carrier according to one of the claims 1 to 30, wherein the middle wall (20) comprises middle wall sections (20', 20") folded together and connected to one another essentially flatly.

32. A container carrier according to claim 33, wherein the middle wall sections (20', 20") on grip sections (21, 22) are linked together on the longitudinal side or the transverse side and comprise lateral connecting sections (26, 27), said grip sections (21, 22) and lateral connecting sections (26, 27) bearing on one another and being connected to one another, wherein in the corner regions between the grip sections (21, 22) and the lateral connecting sections (26, 27) there are arranged the transverse flaps (30, 31) and the transverse flap connecting tabs (32, 33).

33. A container carrier according to claim 32, wherein the middle wall sections (20', 20") proceeding from the lower end of the lateral connecting sections (26, 27) have lower connecting sections (28, 29) below the transverse flaps (30, 31) and transverse flap connecting tabs (32, 33), said lower connecting sections (28, 29) bearing on one another and being connected to one another.

34. A container carrier according to claim 32 or 33, wherein the middle wall (20) comprises inner grip sections (34, 35) which are linked to the other side of the grip sections (21, 22), are linked to one another, are folded against the inner side of the grip sections (21, 22) and are connected to these and as a result of the folding together of the middle wall sections are folded against one another and are connected to one another.

35. A container carrier according to claim 34, wherein the inner grip sections (21, 22) at the side distant to their mutual linking (38) have in each case an inner connecting section (41, 42), wherein their inner connecting sections (41, 42) as a result of the folding together of the middle wall sections are folded against one another and are connected to one another, wherein in each case in the corner region between the inner grip section (34, 35) and the inner connecting section (41, 42) a transverse flap (43, 44) is linked to the respective inner connecting section (41, 42) which on the other side is linked to a neighboring transverse flap connecting tab (32, 33).

36. A container carrier according to one of the claims 32 to 35, wherein edge tabs (45, 46) linked to one another are linked to the side of the grip sections (21, 22), which is allocated to the lateral connecting sections (26, 27), said edge tabs being folded against the inner sides of the grip sections (21, 22) and the lateral connecting sections (26, 27) and are connected to these, as a result of the folding together of the middle wall sections, are folded against one another and are connected to one another and in continuation of their linking line have end tabs (50, 51) which are linked to the grip sections (21, 22) and which are connected to a neighboring end wall (4) of the carrier container.

37. A container carrier according to one of the claims 32 to 36, wherein to lower edge regions of the transverse flap connecting tabs (32, 33) there are connected end side tabs (52, 53) which on a section extended away from the end tabs (50, 51) have further end tabs (56, 57) linked on the end side, said further tabs having further edge tabs (58, 59) which are linked to their side lying opposite their linking and which are linked to one another, wherein the further end tabs (56, 57) are folded about their linkings to the end side tabs (52, 53), the further edge tabs (58, 59) are folded against the inner grip sections (34, 35) and are connected to these and the further edge tabs (58, 59) as a result of the folding together of the middle wall sections are folded against one another and connected to one another.

38. A container carrier according to claim 37, wherein the further edge tabs (58, 59) at the lower edge in each case have a hook section (60, 61), wherein the hook section may be folded together equally overlapping.

39. A container carrier according to claim 33 and 37 or 38, wherein the lower connecting sections (28, 29) are connected to the further edge tabs (58, 59).

40. A container carrier according to claim 32 or 33, wherein a middle wall section (20V) has a folded out end tab (71) which in continuation of the transverse side linking (23') to the other middle wall section (20IV) is linked to the latter.

41. A container carrier according to claim 32 or 33, wherein at least one end of the middle wall (20VI) reinforcement parts (87', 87'') are separated from both middle wall sections (20VII, 20VIII).

42. A container carrier according to claim 8 and 33, 40 or 41, wherein the lower connecting sections (28', 29') are connected to end wall tabs (64', 64") of end wall sections (2', 2'').

43. A container carrier according to claim 9 and 33, 41 or 42, wherein the lateral connecting sections (26", 27'') are connected to end wall tabs (64''', 64IV) of end wall sections (4', 4'').

44. A container carrier according to claim 42 or 43, wherein the middle wall sections (20VII, 20VIII) in each case have end tabs (89, 91) linked to the grip sections (21 ", 22") and the lower connecting sections (28', 29').

45. A container carrier according to one of claims 1 to 44, wherein the connections are completely or partly formed as adhesings.

## Revendications

1. Porte-récipients, comprenant
- un contenant de transport (1) en forme de caisse en un premier matériau plat pliable, avec une paroi de fond (9), des parois latérales (3, 5) et des parois frontales (2, 4),
- une paroi médiane (20) parallèle aux parois latérales (3, 5) en un autre matériau plat pliable avec des rabats transversaux (30, 31, 43, 44) dépliables pour former des casiers pour les récipients, dans lequel
- les parois frontales (2, 4) présentent une ligne de pliage médiane (6, 7) orientée dans le sens transversal et la paroi de fond (9) une ligne de pliage médiane (10) orientée dans le sens longitudinal pour le repliage plat du porte-récipients,
- le contenant de transport (1, 1', 1") présente à toutes les parois frontales (2, 4) des deux côtés de la ligne de pliage médiane (6, 7) des renforts à part par le biais de couches en matériau plat pliable (50, 51, 56, 57 ; 65', 65", 66, 71 ; 87', 87", 89, 91) jointes de manière supplémentaire aux parois frontales (2, 4) au moyen d'un adhésif ou de colle, les renforts étant disposés au moins dans les sections inférieures des parois frontales (2, 4), présentant au moins une section de renfort (65', 65", 66) articulée au bord inférieur de la paroi frontale (2, 4) et rabattue contre celle-ci et/ou présentant au moins une languette frontale (50, 51, 56, 57 ; 71 ; 89, 91) à une extrémité adjacente de la paroi médiane et/ou présentant au moins une partie de renfort (87', 87") détachée de la paroi médiane,
- le premier matériau plat pliable étant un carton kraft et
- le second matériau plat pliable un carton recyclé.

2. Porte-récipients selon la revendication 1, dans lequel les renforts présentent au moins une partie de renfort supplémentaire.

3. Porte-récipients selon la revendication 1 ou 2, dans lequel le contenant de transport (1) est ouvert en haut.

4. Porte-récipients selon l'une des revendications 1 à 3, dans lequel une poignée de transport (15, 16) est disposée en haut de la paroi médiane (20).

5. Porte-récipients selon l'une des revendications 1 à 4, dans lequel le contenant de transport est fabriqué à partir d'une découpe (1) en une seule pièce du premier matériau plat pliable.

6. Porte-récipients selon l'une des revendications 1 à 5, dans lequel le contenant de transport est fabriqué à partir d'une découpe (1) du premier matériau plat pliable qui est imprimée, découpée et collée.

7. Porte-récipients selon l'une des revendications 1 à 6, dans lequel le contenant de transport (1) présente, aux côtés transversaux, des parois latérales et frontales (2 à 5) articulées les unes aux autres avec une languette latérale (8) joignant une paroi latérale (5) et une paroi frontale (2) côté transversal et des sections de paroi de fond (9, 12) articulées aux côtés longitudinaux des parois latérales (3, 5).

8. Porte-récipients selon l'une des revendications 1 à 7, dans lequel le contenant de transport (1') présente, aux côtés transversaux, des parois latérales et frontales (2 à 5) articulées les unes aux autres, au moins une paroi frontale (2) divisée en sections de paroi frontale (2', 2") avec des languettes de paroi frontale (64', 64") joignant les sections de paroi frontale (2', 2") les unes avec les autres côté transversal et des sections de paroi de fond (9, 12) articulées aux côtés longitudinaux des parois latérales.

9. Porte-récipients selon la revendication 8, dans lequel le contenant de transport (1") présente deux parois frontales (2, 4) divisées et les languettes de paroi frontale (64', 64" ; 64"', 64^{IV}) jointes les unes aux autres sont rabattues les unes contre les autres le long d'articulations (6', 6", 7', 7").

10. Porte-récipients selon l'une des revendications 1 à 9, dans lequel le contenant de transport (1, 1', 1") présente le renfort au moins dans une section inférieure d'une paroi frontale (2, 4).

11. Porte-récipients selon l'une des revendications 1 à 10, dans lequel au moins une section de paroi frontale (2', 2", 4") présente au moins une section de renfort (65', 65", 66) articulée à son bord inférieur.

12. Porte-récipients selon l'une des revendications 1 à 11, dans lequel un renfort à part est attribué à la paroi frontale (2, 4) des deux côtés d'une ligne de pliage médiane (6, 7) la traversant.

13. Porte-récipients selon l'une des revendications 1 à 12, dans lequel le renfort est disposé sur la face intérieure de la paroi frontale (2, 4).

14. Porte-récipients selon l'une des revendications 1 à 13, dans lequel le contenant de transport (1) présente à une paroi frontale (4) des sections de poignée (13, 14) présentant des ouvertures de poignée (15, 16) et qui sont rabattues contre la paroi médiane et jointes avec celle-ci le long d'une ligne de pliage médiane (7) dans le prolongement de la ligne de pliage médiane de la paroi frontale.

15. Porte-récipients selon l'une des revendications 1 à 14, dans lequel le second matériau plat pliable est un carton recyclé non couché.

16. Porte-récipients selon l'une des revendications 1 à 15, dans lequel la paroi médiane est fabriquée à partir d'une découpe (20) en une seule pièce du carton recyclé.

17. Porte-récipients selon l'une des revendications 1 à 16, dans lequel la paroi médiane est fabriquée à partir d'une découpe (20) du carton recyclé, qui est découpée et collée.

18. Porte-récipients selon l'une des revendications 1 à 17, dans lequel la paroi médiane (20) présente en haut au moins une section de poignée (21, 22) présentant une ouverture de poignée (24, 25).

19. Porte-récipients selon les revendications 14 et 18, dans lequel les sections de poignée (21, 22 ; 13, 14) de la paroi médiane (20) et du contenant de transport (1) sont collées les unes aux autres avec des ouvertures de poignée (24, 25 ; 15, 16) disposées de manière coïncidente.

20. Porte-récipients selon l'une des revendications 1 à 19, dans lequel les rabats transversaux (30, 31, 43, 44) sont joints aux parois latérales (3, 5) du contenant de transport par le biais de languettes de jonction de rabats transversaux (32, 33).

21. Porte-récipients selon l'une des revendications 1 à 20, dans lequel la paroi médiane (20) est jointes à au moins une extrémité avec la paroi frontale adjacente (4, 2) par le biais d'au moins une languette frontale (50, 51, 56, 57).

22. Porte-récipients selon la revendication 7 et 21, dans lequel la paroi médiane (20) présente aux deux extrémités deux languettes frontales (50, 51 ; 56, 57) dépassant sur différents côtés de celle-ci, les deux languettes frontales (50, 51) étant jointes à l'une des extrémités avec la paroi frontale (4) adjacente et les deux languettes frontales (56, 57) appuyant à l'autre extrémité contre la paroi frontale (2) adjacente.

23. Porte-récipients selon l'une des revendications 1 à 22, dans lequel la paroi médiane (20) présente des languettes frontales (50, 51, 56, 57) qui sont jointes avec les parois latérales (3, 5) par le biais de languettes côté frontal (52, 53) articulées.

24. Porte-récipients selon la revendication 23, dans lequel des languettes frontales (50, 56 et 51, 57) disposées à différentes extrémités de la paroi médiane (20) du même côté de celle-ci présentent respectivement une languette côté frontal (52, 53) commune.

25. Porte-récipients selon la revendication 23 ou 24, dans lequel les languettes côté frontal (52, 53) sont jointes avec une languette de jonction de rabats transversaux (32, 33) respectivement du même côté de la paroi médiane par le biais d'une section (54, 55).

26. Porte-récipients selon les revendications 8 et 21, dans lequel la paroi médiane (20'") présente à une extrémité une languette frontale (71) qui est jointe avec la paroi frontale (4) adjacente qui présente de l'autre côté de la paroi médiane (20"') une section de renfort (66), dans lequel en outre la paroi médiane (20''') est jointe à l'autre extrémité avec les languettes de paroi frontale (64', 64") de la paroi frontale (2', 2") adjacente qui présente des deux côtés de la paroi médiane (20"') des sections de renfort (65', 65").

27. Porte-récipients selon les revendications 8 et 21, dans lequel la paroi médiane (20VI) jointe aux deux extrémités avec les languettes de paroi frontale (64', 64" ; 64''', 64IV) des parois frontales (2, 4) adjacentes, est jointe à une extrémité des deux côtés avec la paroi frontale (2', 2") adjacente par le biais de languettes frontales (89, 91) et à l'autre extrémité, des parties de renfort (87', 87") détachées de la paroi médiane (20VI) sont jointes avec la paroi frontale (4', 4") adjacente.

28. Porte-récipients selon l'une des revendications 1 à 27, dans lequel la paroi médiane (20) présente au bord inférieur au moins un crochet (60, 61) et la paroi de fond (9) un logement (11) adapté pour le crochet.

29. Porte-récipients selon la revendication 28, dans lequel la paroi médiane (20) présente le crochet (60, 61) à une extrémité.

30. Porte-récipients selon l'une des revendications 1 à 29, dans lequel la paroi médiane (20) est réalisée à partir de la poignée de transport jusqu'à sa jointure avec au moins une paroi frontale (4) et/ou la paroi de fond et/ou au moins une paroi latérale (9) en plusieurs couches avec une jonction entre les couches.

31. Porte-récipients selon l'une des revendications 1 à 30, dans lequel la paroi médiane (20) présente des sections de paroi médiane (20', 20") repliées et jointes les unes avec les autres essentiellement de manière plane.

32. Porte-récipients selon la revendication 31, dans lequel les sections de paroi médiane (20', 20") sont articulées les unes aux autres à des sections de poignée (21, 22) côté longitudinal ou côté transversal et présentent des sections de jonction latérales (26, 27), lesquelles sections de poignée (21, 22) et sections de jonction latérales (26, 27) appuient les unes contre les autres et sont jointes les unes avec les autres, des rabats transversaux (30, 31) et les languettes de jonction de rabats transversaux (32, 33) étant disposés dans les zones d'angle entre les sections de poignée (21, 22) et les sections de jonction (26, 27) latérales.

33. Porte-récipients selon la revendication 32, dans lequel les sections de paroi médiane (20', 20") présentent des sections de jonction inférieures (28, 29), partant de l'extrémité inférieure des sections de jonction latérales (26, 27), sous les rabats transversaux (30, 31) et les languettes de jonction de rabats transversaux (32, 33), lesquelles sections de jonction inférieures (28, 29) appuient les unes contre les autres et sont jointes les unes avec les autres.

34. Porte-récipients selon la revendication 32 ou 33, dans lequel la paroi médiane (20) présente des sections de poignée intérieures (34, 35) articulées à l'autre côté des sections de poignée (21, 22), qui sont articulées les unes aux autres, rabattues contre la face intérieure des sections de poignée (21, 22) et jointes avec celles-ci et sont, par suite du repliage des sections de paroi médiane, rabattues les unes contres les autres et jointes les unes avec les autres.

35. Porte-récipients selon la revendication 34, dans lequel les sections de poignée intérieures (21, 22) présentent respectivement une section de jonction intérieure (41, 42) du côté opposé à leur articulation (38) mutuelle, leur sections de jonction intérieures (41, 42) étant rabattues les unes contres les autres et jointes les unes avec les autres par suite du repliage des sections de paroi médiane, un rabat transversal (43, 44) étant articulé à la section de jonction intérieure (41, 42) respective, respectivement dans la zone d'angle entre la section de poignée intérieure (34, 35) et la section de jonction intérieure (41, 42), qui est d'autre part articulée à une languette de jonction de rabats transversaux (32, 33) adjacente.

36. Porte-récipients selon l'une des revendications 32 à 35, dans lequel des languettes marginales (45, 46) articulées les unes aux autres sont articulées au côté des sections de poignée (21, 22) correspondant aux sections de jonction latérales (26, 27), les languettes marginales (45, 46) étant rabattues contre les faces intérieures des sections de poignée (21, 22) et des sections de jonction latérales (26, 27) et jointes avec celles-ci, étant par suite du repliage des sections de paroi médiane rabattues les unes contre les autres et jointes les unes avec les autres et présentant, dans le prolongement de leur ligne d'articulation, des languettes frontales (50, 51) articulées aux sections de poignée (21, 22) et qui sont jointes avec une paroi frontale (4) adjacente du contenant de transport.

37. Porte-récipients selon l'une des revendications 32 à 36, dans lequel, avec des zones marginales inférieures des languettes de jonction de rabats transversaux (32, 33), sont jointes des languettes côté frontal (52, 53), qui présentent à une section s'étendant en s'éloignant des languettes frontales (50, 51) d'autres languettes frontales (56, 57) articulées du côté extrémité, qui présentent articulées du côté faisant face à leur articulation d'autres languettes marginales (58, 59), qui sont articulées les unes aux autres, les autres languettes frontales (56, 57) étant rabattues le long de leurs articulations avec les languettes côtés frontal (52, 53), les autres languettes marginales (58, 59) étant rabattues contre les sections de poignée intérieures (34, 35) et jointes avec celles-ci et les autres languettes marginales (58, 59) étant rabattues les unes contre les autres et jointes les unes avec les autres par suite du repliage des sections de paroi médiane.

38. Porte-récipients selon la revendication 37, dans lequel les autres languettes marginales (58, 59) présentent au bord inférieur respectivement une section de crochet (60, 61), les sections de crochet étant rabattues les unes contre les autres de manière coïncidente.

39. Porte-récipients selon les revendications 33 et 37 ou 38, dans lequel les sections de jonction inférieures (28, 29) sont jointes avec les autres languettes marginales (58, 59).

40. Porte-récipients selon la revendication 32 ou 33, dans lequel une section de paroi médiane (20V) présente une languette frontale (71) dépliée qui, dans le prolongement de l'articulation côté transversal (23') avec l'autre section de paroi médiane (20IV), est articulée à cette dernière.

41. Porte-récipients selon la revendication 32 ou 33, dans lequel au niveau d'au moins une extrémité de la paroi médiane (20VI), des parties de renfort (87', 87") sont détachées des deux sections de paroi médiane (20VII, 20VIII).

42. Porte-récipients selon les revendications 8 et 33, 40 ou 41, dans lequel les sections de jonction inférieures (28', 29') sont jointes avec des languettes de paroi frontale (64', 64") des sections de paroi frontale (2', 2").

43. Porte-récipients selon les revendications 9 et 33, 41 ou 42, dans lequel les sections de jonction latérales (26", 27") sont jointes avec des languettes de paroi frontale (64'", 64IV) des sections de paroi frontale (4', 4").

44. Porte-récipients selon la revendication 42 ou 43, dans lequel les sections de paroi médiane (20VII, 20VIII) présentent des languettes frontales (89, 91) articulées respectivement aux sections de poignée (21", 22") et aux sections de jonction inférieures (28', 29').

45. Porte-récipients selon l'une des revendications 1 à 44, dans lequel les jonctions sont réalisées complètement ou en partie en tant que collages.
